# EUROPEAN PATENT APPLICATION

(11) **EP 4 819 442 A1**
(43) Date of publication of application: **07.10.2026**
(21) Application number: 25168374.4
(22) Date of filing: 03.04.2025
(51) Int. Cl.: H02J 50/12, H02J 50/80

(54) **WIRELESS POWER TRANSFER**

(71) Applicant: Koninklijke Philips N.V., 5656 AE Eindhoven (NL)
(72) Inventor: ETTES, Wilhelmus Gerardus Maria, 5656 AG Eindhoven (NL); RIETSTRA, Friso Jens Gjerryt, 5656 AG Eindhoven (NL); LULOFS, Klaas Jakob, 5656 AG Eindhoven (NL); DRAAK, Johannes Wilhelmus, 5656 AG Eindhoven (NL); OP HET VELD, Johannes Hubertus Gerardus, 5656 AG Eindhoven (NL)
(74) Representative: Philips Intellectual Property & Standards

(57) **Abstract**

A power transmitter (101) for wirelessly providing power to a power receiver (105) comprises an output circuit (303, 103) comprising a transmitter coil (103) generating a power transfer signal when a drive signal is applied to the output circuit (303, 103). A power controller (305) adapts the power level by varying the drive frequency. A measurement circuit (307) controls the driver (301) to set the drive frequency to a first measurement frequency and to generate the drive signal to have a waveform comprising at least one higher harmonic at a harmonic frequency being a multiple of the first measurement frequency. It further determines a first measured transmitter coil current by performing a first measurement of a transmitter coil current for the transmitter coil at the first measurement frequency and determining a second measured transmitter coil current by performing a second measurement of the transmitter coil current at the harmonic frequency. A frequency controller (309) controls the power controller (305) to further adapt the drive frequency in dependence on the first measured transmitter coil current and the second measured transmitter coil current.

## Description

### FIELD OF THE INVENTION

The invention relates to a wireless power transfer system and in particular, but not exclusively, to the operation of a power transmitter providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2KW.

A potential problem with wireless power transfer is that the power transfer performance may depend significantly on the specific conditions. In particular, the power transfer performance in terms of efficiency, achievable power levels, adaptation response times, etc., tend to depend heavily on properties of the power transmitter and the power receiver such as sizes, induction values and loads and these may vary very substantially between different devices. The power transfer operation may also depend substantially on how the transmitter coil and the receiver coil are positioned relatively to each other. In general, more efficient and reliable power transfer tends to be achieved for the coils aligning and being closer to each other. Typically, the power transfer performance depends on the coupling factor or coefficient and the higher the coupling factor the more efficient the power transfer.

Thus, the power transfer operation depends substantially on the specific power transmitter and power receiver arrangement including both parameters of the power transmitter and of the power receiver, as well as of the specific scenario of the operation such as the relative positioning of the power transmitter and the power receiver.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero. In many systems, the power transmitter may control the power level by varying a frequency, amplitude level and/or duty cycle of the power transfer signal. Examples of wireless power transfer systems using frequency variation to control the power level are disclosed in US 2019/089197A1 and CN 103 299 512A.

However, the efficient operation of such a power control loop is very challenging and difficult when the power transfer properties of the system may vary substantially. In particular when frequency control is used to adapt the power transfer levels, an efficient power control operation is difficult to achieve. Many approaches will tend to result in suboptimal and/or more complex operation and control for some scenarios and power transfer arrangements. Adapting the operation, and in particularly dynamically during power transfer, is challenging and difficult. It tends to require complex measurement functionality and to interfere with the desired power transfer operation.

Hence, an improved operation for a power transfer system would be advantageous and, in particular, an approach allowing increased flexibility, reduced cost, reduced complexity, improved power control operation, improved adaptation to load changes and/or variations in the operating conditions, backwards compatibility, improved suitability for higher power level transfers, improved power transfer, improved adaptation to specific operating conditions, facilitated and/or improved measurement based adaptation, faster and/or more suitable measurements, reduced impact of measurements on the power transfer operation, and/or an improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal, the power transmitter comprising: an output circuit comprising a transmitter coil arranged to generate the inductive power transfer signal in response to a drive signal being applied to the output circuit, the drive signal being a varying signal having a (variable) drive frequency; a driver arranged to generate the drive signal; a power controller arranged to adapt a power level of the inductive power transfer signal by varying the drive frequency (in response to messages received from the power transmitter); a measurement circuit arranged to: control the driver to set the drive frequency to a first measurement frequency and to generate the drive signal to have a waveform comprising at least one higher harmonic at a harmonic frequency being a multiple of the first measurement frequency, determine a first measured transmitter coil current by performing a first measurement of a transmitter coil current for the transmitter coil at the first measurement frequency and determining a second measured transmitter coil current by performing a second measurement of the transmitter coil current at the harmonic frequency; a frequency controller arranged to control the power controller to further adapt the drive frequency in dependence on the first measured transmitter coil current and the second measured transmitter coil current.

The invention may provide improved performance in many embodiments and may in particular in many embodiments provide improved power control for a wireless power transfer. The approach may in many embodiments facilitate power control and allow for a lower complexity operation. The approach may in many embodiments allow improved power control and may for example allow an improved power level range, smoother power control, and/or improved driving of the output circuit (e.g. using zero voltage switching).

The approach may allow improved dynamic operation and may allow adaptation of the operation to current conditions based on measurements of the transmitter coil current. The measurements may be real time measurements and may in many embodiments be performed during a power transfer phase. The measurements may in accordance with embodiments of the approach be performed faster and/or with low complexity. The impact on, and interruption of, the power transfer operation may be reduced in many scenarios

In many embodiments, the waveform for the measurement may be a square waveform. In many embodiments, the power level may be controlled both by varying the drive frequency and by varying a duty cycle of the drive signal. In many embodiments and scenarios, the measurements of the transmitter coil current may be simultaneous measurements. The first measurement frequency may be a frequency of the fundamental or first harmonic signal components of the drive signal. The harmonic frequency may be a frequency of a second, third, fourth, etc. harmonic of the drive signal.

In many embodiments, the measurement circuit is further arranged to determine a third measured transmitter coil current by performing a third measurement of a transmitter coil current for the transmitter coil at a second harmonic frequency being a (different) multiple of the drive frequency.

In many embodiments, the output circuit includes a capacitor forming a resonance circuit with the transmitter coil.

In many embodiments, the second measurement frequency is a 2^{nd} harmonic of the first measurement frequency.

In accordance with an optional feature of the invention, the frequency controller is arranged to determine a drive frequency operation range for the drive signal in dependence on the first measured transmitter coil current and the second measured transmitter coil current, and to control the power controller to constrain the drive frequency to not exceed the drive frequency operation range.

This may provide improved performance and/or operation in many embodiments.

The drive frequency operation range may include a plurality of disjoint frequency intervals.

The approach may in particular allow improved power control for systems where the parameters of the power transfer may vary substantially.

In accordance with an optional feature of the invention, the first measurement frequency is a predetermined frequency.

This may provide improved performance and/or operation in many embodiments. The predetermined frequency may in many embodiments advantageously be a resonance frequency of the power receiver. The predetermined frequency may in many embodiments advantageously be in a range from 20kHz-40kHz.

In accordance with an optional feature of the invention, the measurement circuit is arranged to determine the first measured transmitter coil current and the second measured transmitter coil current during a power transfer phase.

This may provide improved performance and/or operation in many embodiments. In particular, it may provide improved adaptation and dynamic performance during power transfer.

In accordance with an optional feature of the invention, the measurement circuit is arranged to determine a third measured transmitter coil current by performing a measurement of the transmitter coil current at a current operating frequency of the drive signal, and the frequency controller is arranged to control the drive frequency in dependence on the third measured transmitter coil current.

This may provide improved performance and/or operation in many embodiments.

In accordance with an optional feature of the invention, the frequency controller is arranged to determine a power transfer function reflecting a power transfer level as a function of the drive frequency in dependence on the first measured transmitter coil current and the second measured transmitter coil current, and to control the drive frequency in dependence on the power transfer function.

This may provide improved performance and/or operation in many embodiments. In particular, it may provide substantially improved adaptation of the performance and operation to the current conditions.

In many embodiments, the power transfer function may be a transmitter coil current profile/function representing the transmitter coil current as a function of the drive frequency.

In some embodiments, the power transfer function (which may be indicative of a level of power transferred to the power receiver as a function of the frequency of the drive signal) may include or be represented by a transfer power load function (which may be indicative of a loading of the driver/ drive signal caused by power transfer as a function of the frequency of the drive signal), a power loading function (which may be indicative of a loading of the driver/ drive signal by the output circuit as a function of frequency of the drive signal), and/or a load impedance function of the output circuit (which may be indicative of an impedance of the output circuit as a function of the frequency of the drive signal).

The power transfer function may be indicative of a load of the driver. The power transfer function may describe the load of an output of the driver generating the drive signal/ providing the drive signal to the output circuit. The load may be an impedance of the output circuit presented to an output of the driver generating the drive signal.

In accordance with an optional feature of the invention, the frequency controller is arranged to estimate a peak of the power transfer function, and to determine an operating frequency range to not include frequencies lower than a frequency of the peak.

This may provide improved performance and/or operation in many embodiments. The frequency controller may control the power controller to constrain the drive frequency to not exceed the operating frequency range.

In accordance with an optional feature of the invention, the frequency controller is arranged to determine a frequency range for the drive frequency for which the transmitter coil current decreases for an increasing frequency, and to control the drive frequency in dependence on the frequency range.

This may provide improved performance and/or operation in many embodiments.

In many embodiments, the frequency controller may be arranged to determine a drive frequency operation range for the drive signal in in dependence on the frequency range (and specifically as a subrange of the frequency range), and to control the power controller to constrain the drive frequency to be within the drive frequency operation range.

In accordance with an optional feature of the invention, the frequency controller is arranged to determine a frequency range for the drive frequency for which a phase of a current of the drive signal is negative relative to a voltage of the drive signal, and to control the drive frequency in dependence on the frequency range.

This may provide improved performance and/or operation in many embodiments.

In many embodiments, the frequency controller may be arranged to determine a drive frequency operation range for the drive signal in dependence on this frequency range (and specifically as a subrange of the frequency range), and to control the power controller to constrain the drive frequency to be within the drive frequency operation range.

In accordance with an optional feature of the invention, the frequency controller is arranged to adapt a loop gain for a power control loop controlling the power level of the inductive power transfer signal in dependence on the first measured transmitter coil current and the second measured transmitter coil current.

This may provide improved performance in many scenarios.

In some embodiments, the frequency controller is arranged to adapt a loop gain for a power control loop controlling the power level of the inductive power transfer signal in dependence on a property of the power transfer function.

In accordance with an optional feature of the invention, the wireless power transmitter comprises a receiver arranged to receive power receiver property data from the power receiver, the power receiver property data being indicative of a property of the power receiver; and the frequency controller is arranged to control the drive frequency in dependence on the receive power receiver property data

This may provide improved performance in many scenarios.

In many embodiments, the frequency controller is arranged to determine the power transfer function in dependence on the receive power receiver property data.

In accordance with an optional feature of the invention, the wireless power transmitter comprises a receiver arranged to receive a power step change request from the power receiver; and the measurement circuit is arranged to initialize the first measurement and the second measurement in response to receiving the power step change request.

This may provide improved performance and/or operation in many embodiments.

In accordance with an optional feature of the invention, the frequency controller is arranged to compensate second measured transmitter coil current for a level difference between a harmonic of the waveform at the harmonic frequency and a harmonic of the waveform at the first measurement frequency.

This may provide improved performance and/or operation in many embodiments.

In accordance with an optional feature of the invention, the waveform is a square waveform having a duty cycle not in excess of, and typically lower than, 25%.

This may provide improved performance and/or operation in many embodiments.

According to an aspect of the invention there is provided a method of operation for a power transmitter wirelessly providing power to a power receiver via an inductive power transfer signal, the power transmitter comprising: an output circuit comprising a transmitter coil arranged to generate the inductive power transfer signal in response to a drive signal being applied to the output circuit, the drive signal being a varying signal having a drive frequency; a driver arranged to generate the drive signal; and the method comprising: adapting a power level of the inductive power transfer signal by varying the drive frequency; controlling the driver to set the drive frequency to a first measurement frequency and to generate the drive signal to have a waveform comprising at least one higher harmonic at a harmonic frequency being a multiple of the first measurement frequency; determining a first measured transmitter coil current by performing a first measurement of a transmitter coil current for the transmitter coil at the first measurement frequency and determining a second measured transmitter coil current by performing a second measurement of the transmitter coil current at the harmonic frequency; and adapting the drive frequency in dependence on the first measured transmitter coil current and the second measured transmitter coil current.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of an electrical equivalence diagram for power transfer in the power transfer system of FIG. 1;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of a power transfer function for the power transfer system of FIG. 1;
FIG. 8 illustrates an example of a drive signal for the power transfer system of FIG. 1;
FIG. 9 illustrates an example of a power transfer function for the power transfer system of FIG. 1;
FIG. 10 illustrates an example of an electrical equivalence diagram for the power transfer system of FIG. 1;
FIG. 11 illustrates an example of signals for the power transfer system of FIG. 1;
FIG. 12 illustrates an example of a power transfer function for the power transfer system of FIG. 1;
FIG. 13 illustrates an example of a power transfer function for the power transfer system of FIG. 1;
FIG. 14 illustrates an example of a power transfer function for the power transfer system of FIG. 1;
FIG. 15 illustrates an example of a power transfer function for the power transfer system of FIG. 1; and
FIG. 16 illustrates an example of signals for the power transfer system of FIG. 1.

### DETAILED DESCRIPTION OF THE EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

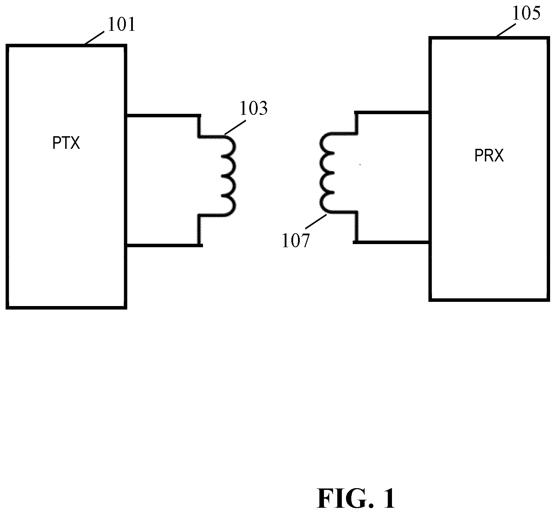

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the baseline power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1, 1.2 or 1.3 (except for the herein described (or consequential) modifications and enhancements).

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In many power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal to the power control function in the power transmitter to reduce the static error, ideally to zero.

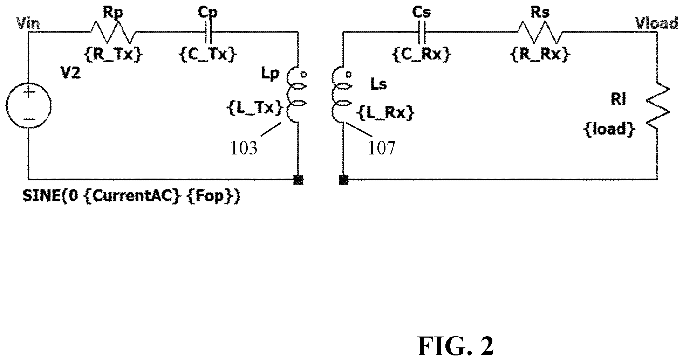

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affects the coupling between the coils, i.e. the primary (power transmitter side) inductor Lp and the secondary (power transmitter side) inductor Ls, and thus may significantly change the system behavior.

Furthermore, the power receiving devices may have several different modes in which they operate, such as for example with several loads being switched on or off in different modes. For example, for the power receiver being an air fryer appliance, the heating element can be turned on and off. This may e.g. result in a very substantially load step from, say, 50 to 1200W and vice versa. Further, such load switching may be repeated during operation of the device to keep the temperature constant.

Systems can also contain non-linear loads, e.g. rather than a resistive component, the power receiver may drive a motor, such as e.g. a motor of a food processor. This results in a completely different response of the system and this has a large impact on specifically the control system design.

A wireless power transfer system may employ a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal, or possibly the desired power setpoint, to the power control function in the power transmitter to reduce the static error, ideally to zero.

However, since the system performance and operation vary greatly depending on the existing power transmitter and power receiver combination and placements, the appropriate operating point also varies greatly.

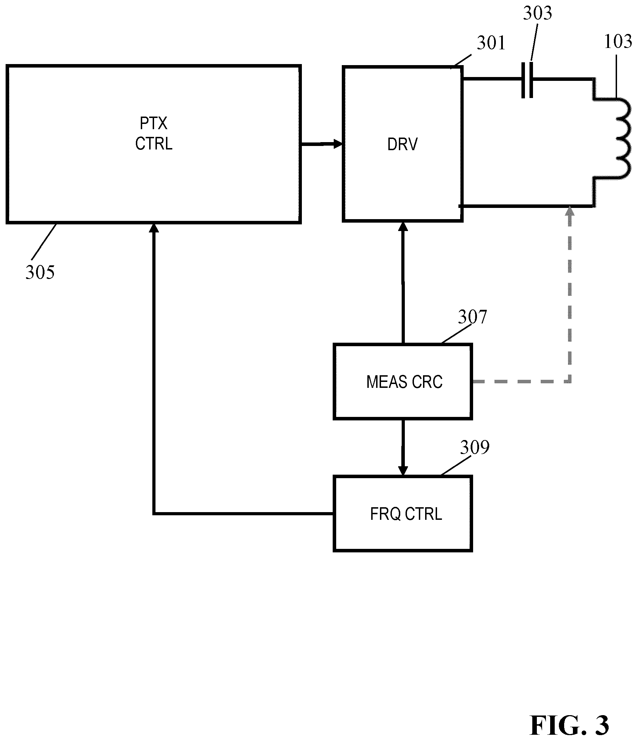

FIG. 3 illustrates elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one including multiple inductors and/or capacitors. It will be appreciated that the output circuit 103, 303 in some embodiments may also include additional components (such as e.g. a current or voltage sensor component).

The driver 301 generates the current and voltage which is fed to the output resonance circuit and thus to the transmitter coil 103. The drive signal causes current through the transmitter coil 103 resulting in an electromagnetic power transfer signal being generated.

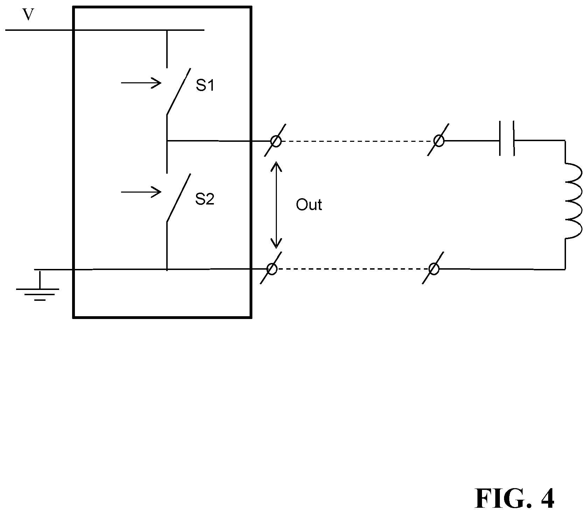

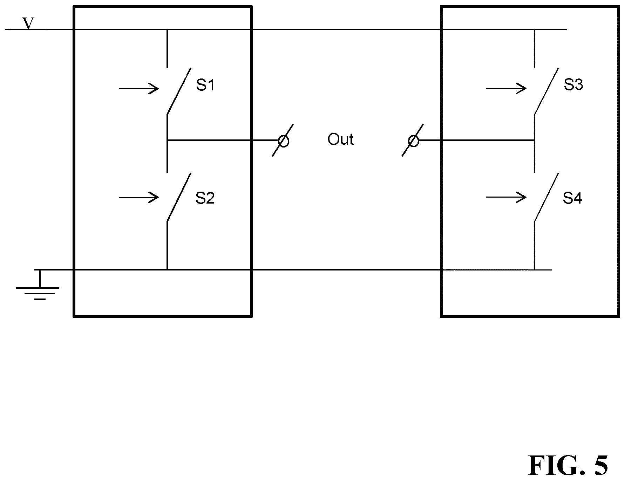

The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency. Typically there is a dead time in which both(/all) switches are off. During this dead time, the inverter node voltage may swings from high to low (and vice versa), preferably under zero voltage switching conditions.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi Specification or the Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

The power transmitter controller 305 may further comprise functionality for communicating with the power receiver 105. For example, the power transmitter controller 305 may be arranged to transmit data to the power receiver 105 by modulating the power transfer signal and receive data from the power receiver 105 by detecting load modulation of the power transfer signal. It will be appreciated that in other embodiments, other means of communication may be used such as e.g. a separate communication functionality such as NFC communication may be implemented.

The use of a resonance circuit including the transmitter coil 103 is well known to provide a more efficient power transfer in many scenarios. Furthermore, having a power receiver which also employs a resonance circuit, i.e. where the receiver coil 107 is part of a resonance circuit, may result in resonant power transfer that provides a number of advantages including a highly efficient power transfer and facilitated control of the power transfer, such as e.g. by controlling the frequency of the drive signal.

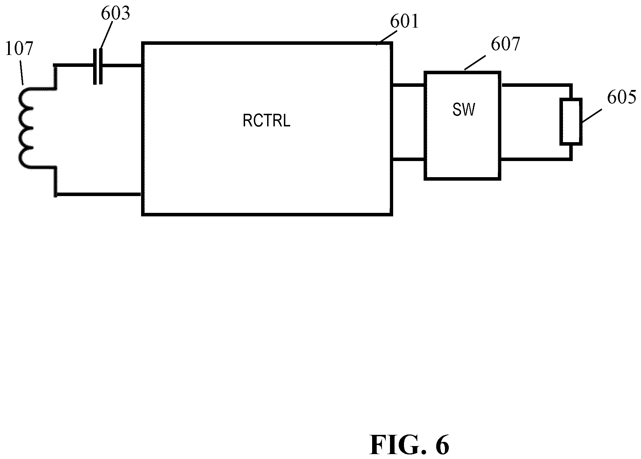

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting and disconnecting the load 605. The power receiver controller 601 includes a power control path which converts the power extracted by the receiver coil 107 into a suitable supply for the load 605. In some embodiments, the power receiver controller 601 may provide a direct power path which simply connects the input resonance circuit to the switch 607 or load 605, i.e. the power path of the power receiver controller 601 may simply be implemented by two wires. The switch 607 may thus connect/disconnect the secondary resonance circuit with/from the load 605. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit. The switch 607 is typically present in almost all Ki applications and is implemented as a no-contact a mechanical relay since the switch 607 is used to protect non Ki inverters from being damaged (such as e.g. low cost single switch induction hobs).

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In some embodiments, a separate communication function, such as an NFC communication function may be employed.

In operation, the system is arranged to control the drive signal such that the power transfer signal attains suitable operating parameters/ properties, and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. In some embodiments, a direct power setpoint change message may be transmitted indicating a desired absolute power level (rather than a relative error message). The power receiver 105 comprises functionality for supporting such a power control loop, e.g. the power receiver controller 601 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

When receiving a power control error message from the power receiver, the transmit controller 305 may determine how the drive signal parameter should be modified to increase or decrease the power level of the power transfer signal as requested. It may then control and adapt the drive signal parameter accordingly.

A power control loop is accordingly employed which controls a power property of the power transfer signal to result in the desired operating point at the power receiver. The operation of the power transfer is thus controlled by a power control loop and the effective operation of this is critical to the performance of the system. Initializing or adapting the power control loop to the operation conditions is thus critical for optimum performance.

In many systems the power adaptation is fully or partly achieved by adapting the frequency of the drive signal and power transfer signal. Especially when using resonance coupled power transmitter output circuits and power receiver input circuits, i.e. with the transmitter coil 103 and the receiver coil 107 being part of respective resonance circuits, varying the frequency of the drive signal provides a very efficient and implementation friendly approach for adapting the power level being transferred.

However, whereas such an approach of adjusting the frequency may have a number of advantages, it also has disadvantages and effective and accurate control may be difficult to achieve in some scenarios.

In particular, it has been found that highly irregular, non-monotonic, and/or non-linear relationships between power transfer and drive signal frequency may often occur with more than one resonance frequency in the system and with a highly varying characteristics being present between the resonance frequencies. The power transfer operation may be dependent on a power transfer function which represents/describes the power transfer level as a function of the drive frequency. The loading of the transmitter coil 103, and thus the drive signal and driver 101, is directly related to the power transfer level. The power transfer function (or profile) may also be referred to as a load function and may be indicative of/describing the loading of the transmitter coil 103/the drive signal as a function of frequency.

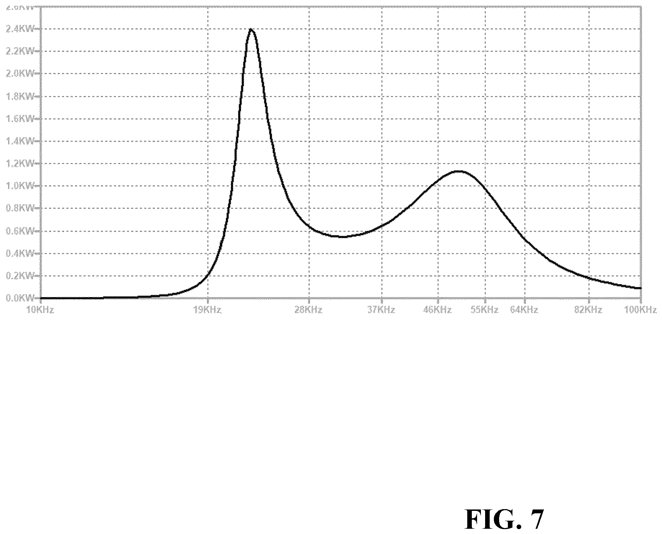

The power transfer profile/function may be relatively complex for most wireless power transfer operations and may further be highly dependent on the particular operating parameters (including the relative positioning of the power receiver with respect to the power transmitter). FIG. 7 illustrates an example of a possible power transfer profile/function. The shape of the function is one that may often be encountered in practical wireless power transfer systems.

However, such power transfer functions may be difficult to control and in particularly it may be challenging to accurately operate the power control loop such that smooth, efficient, and reliable power adaptation is achieved. Such issues are typically exacerbated when the transfer functions are non-monotonic and typically non-linear.

For example, in an example such as FIG. 7 where the system has two different resonance peaks, it may sometimes be necessary to control the frequency to be close to the lower frequency peak in order to achieve the desired power levels (for example to reach 2.2kW it may be necessary to control the frequency to be close to the lower frequency peak). However, at other times, it may be desirable or even necessary to control the frequency to be higher than the second (higher frequency) peak in order to reduce the power levels to sufficiently low values and with sufficient accuracy. However, due to the non-monotonic relationships, the control may be difficult and suboptimal. For example, when increasing the frequency from being close to the first resonant peak to being higher than the second resonance peak, the system sweeps through the second peak itself, this can cause undesirable performance such as overvoltages or over-currents at the power receiver as power increases as part of this sweep over the second peak.

The behavior is further dependent on the specific operating conditions which may vary substantially. For example, small changes in the relative position of the power receiver or even the presence of (electro)magnetic objects in the proximity may cause relative substantial changes in the power transfer function.

In order to improve the power transfer operation, and in particular the power control performance for a power control using the drive frequency to adapt the power level, it is desirable to determine the current characteristics of the power transfer, and in some cases to preferably determine the power transfer profile/function. It is desirable to do so based on measurements of the current power transfer operation, and in many scenarios preferably based on dynamic real-time measurements.

The power transmitter of FIG. 3 includes functionality for making measurements that allow power transfer properties, and in many cases the full power transfer profile/function, to be determined. The approach may allow suitable measurements to be performed at low complexity and with low disruption to the power transfer operation.

Specifically, the power transmitter of FIG. 3 includes a measurement circuit 307 which is arranged to efficiently measure the transmitter coil current at different frequencies. Thus, measurements may be performed which provide measurement values that are indicative of the current through the transmitter coil 103. It will be appreciated that many different approaches for measuring a current are known and that any suitable approach may be used.

The measurement circuit 307 is coupled to a frequency controller 309 which is further coupled to the power transmitter controller 305. The frequency controller 309 is arranged to control the power transmitter controller 305, and specifically the power control function thereof, such that the setting of the drive frequency is further in dependence on the transmitter coil current. In some cases, the frequency controller 309 may control the power transmitter controller 305 to directly set a given frequency based on the measurements, and thus it may directly override the power control state/function. In other embodiments, as will be described in detail later, the frequency controller 309 may be arranged to adapt an operation parameter of the power control loop, such as determining/adapting a property of an operational range/interval for the drive frequency etc. In some embodiments, the frequency controller 309 may also be arranged to adapt a dynamic property of the power control loop operation, such as a loop gain.

The measurement circuit 307 is arranged to perform a particular measurement where measurements for different frequencies may be performed simultaneously.

When performing the measurements, the measurement circuit 307 controls the driver 301 to generate a drive signal with a given frequency, henceforth referred to as the first measurement frequency. It furthermore sets the drive signal to have a waveform which has substantial harmonic content. The measurement circuit 307 controls the driver 301 to, during measurements, generate a drive signal with a given frequency and with a waveform that includes at least one higher harmonic frequency that is a higher (N>1) multiple of the drive frequency.

In many embodiments, the measurement circuit 307 may control the driver 301 to generate a drive signal for which a level of one, more, or typically all of the harmonics for which a measurement of the transmitter coil current is performed is not less than 10%, 20%, 30%, 50%, or 70% of the level of the fundamental frequency/drive frequency/first measurement frequency.

In many embodiments, the measurement circuit 307 may control the driver to generate a drive signal with a square wave form. Further, it may control the duty cycle to increase the level of the higher harmonics relative to the level at the first measurement frequency. In particular, the measurement circuit 307 may control the duty cycle to be close to 20%, and in many embodiments between 15%-25%.

In particular, the measurement circuit 307 may control the driver 301 to, during measurements, generate the drive signal as a PWM signal that has e.g. a strong first, second and/or third harmonic component. In the particular example, the duty cycle D may be set to 20% for all for measurements.

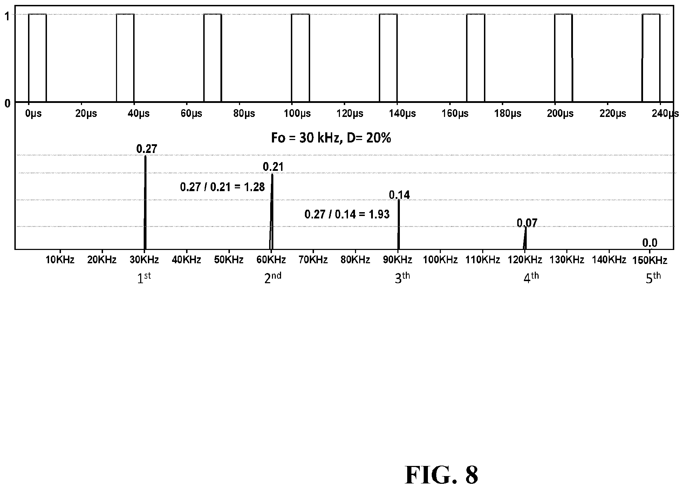

A PWM signal with a duty cycle D of 50% has no second harmonic, when D = 33% there is no third harmonic, when D = 25% there is no fourth harmonic and when D = 20% there is no fifth harmonic etc. In this example the duty cycle D equals 20% for all for measurements as this may provide a particular advantageous operation in many cases and in particular may result in strong harmonic signals suitable for measuring the transmitter coil current at suitable frequencies. An example of such a signal and the corresponding frequency signal and harmonics are illustrated in FIG. 8. In the example, the drive frequency/fundamental frequency of the drive signal is 30kHz.

The measurement circuit 307 is arranged to measure the transmitter coil current at at least two different frequencies, namely at the measurement frequency being the fundamental frequency/first harmonic/drive frequency of the drive signal during the measurement process as well as at a frequency that is a harmonic thereof. Thus, at least two measurements of the transmitter coil current are made at different frequencies for the same signal being applied to the output circuit.

In most embodiments, more measurements are typically made during the application of the measurement drive signal (the drive signal set to the measurement frequency and the measurement waveform). In many embodiments, more than two measurements may be made. In many embodiments, three measurements of the transmitter coil current may be made for the same measurement drive signal, and in particular a measurement of the transmitter coil current at the first (fundamental), second, and third harmonic frequency is performed.

In many embodiments, the measurements may be simultaneous and performed in parallel. For example, the measurement circuit 307 may receive a measurement signal indicative of the transmitter coil current (e.g. as a sampled voltage signal of a voltage drop for a small resistor in series with the transmitter coil current or a signal from a current transformer in series with the transmitter coil 103). It may comprise a plurality of bandpass filters centered around the different measurement frequencies. In particular, one filter is centered on the first harmonic frequency, one on the second harmonic frequency, and one on the third harmonic frequency. The measurement signal is in parallel fed to each of these measurement filters and the output of each filter may indicate the measured transmitter coil current at the measurement frequency that is comprised in the bandpass of the filter. The filters may in many embodiments have a sharp response and be quite narrow, and in many embodiments the measurement filters may have a quality (Q) factor of no less than 5,10, 20, 50, or 100. The filters may for example be implemented as IIR or FIR filters being applied to a digital/sampled measurement signal.

It will be appreciated that in some embodiments, the measurements may be performed sequentially during the measurement interval in which the measurement drive signal is applied. For example, a single IIR filter may be implemented with the coefficients being sequentially changed to generate a filter for each of the harmonics. Another method would be using a Fourier transform applied to the frequencies of interest which reveals the amplitude and phase.

The approach may provide a particularly efficient and low complexity approach for measuring the transmitter coil current at different frequencies throughout a suitable frequency range for the drive signal. The approach may allow fast measurements thereby reducing the impact on the power transfer operation. Further, the generation and exploitation of harmonics of the drive signal provide measurement frequencies that are spread out through the potential frequency range for the power transfer operation. The measurements may accordingly not only be fast and low complexity measurements but may also provide advantageous characterization of the power transfer operation throughout the relevant frequency range. Further, the transmitter coil current provides a very good indication and measure of the power transfer operation and directly reflects the power level of the power transfer.

The frequency controller 309 receives the measurements at the different frequencies and proceeds to control the power controller 305 to adapt the drive frequency in dependence on the measurements. The specific adaptation and control of the drive frequency in dependence on the measurements will depend on the particular requirements, preferences, and desired operation of the individual embodiment and a number of different approaches will be described in detail later.

In many embodiments, the frequency controller 309 may directly set the drive frequency to a specific frequency based on the measurements. As another example, in many embodiments, the frequency controller 309 may be arranged to determine/select an operating frequency range for the power transfer operation. Specifically, the frequency controller 309 may select/determine an operating frequency range with the power controller 305 then being arranged/constrained to only vary the drive frequency within this range.

As a specific example, if the power transmitter is seeking to initialize or reset the power control loop (e.g. in response to receiving a power request to substantially change the power), the transmitter coil current measurement at the fundamental frequency and the harmonic frequency may be compared to the desired power setting, and the drive frequency may be set to the frequency of the two possible frequencies that most closely compares to the desired power setting. Alternatively or additionally, two predetermined operating ranges may be predefined with one including the fundamental frequency but not the second harmonic frequency, and the other including the second harmonic frequency, but not the fundamental frequency. The operating frequency range constraining the power control operation may then be selected as the operating range that contains the frequency of the measurement most closely matching that of the requested power.

As another example, in some embodiments, the frequency controller 309 may include a trained neural network which is arranged to receive the measurement transmitter coil current values as input values and which generates an output corresponding to an operating frequency range (or e.g. directly a drive frequency). The trained neural network may receive other data as input data, such as configuration parameters, the current or desired power level, power transmitter properties, power receiver properties, further measurements (e.g. of the transmitter coil current at other frequencies) etc. The trained neural network may be trained using training data that is generated from measurements and tests made during a design and development phase. For example, many measurements may be made for different power levels to generate a large batch of transmitter coil current measurements for power transfer operations. A preferred operating frequency range for each operational point and measurement test set may be determined manually determined by a technician to create a test set comprising the measurement data (as well as any other data that is considered) and an associated optimum operating frequency range. A loss function may then be determined as the difference between the operating frequency range generated by the trained neural network and the manually determined optimum frequency range for the input measurement data. The neural network may then be trained based on such test data and loss function.

The power transmitter may accordingly be arranged to provide improved adaptation of the setting of the drive frequency and in particular improved adaptation of the power control operation based on low complexity, low resource, and typically fast measurements with little impact on the power transfer operation.

The approach is particularly suitable for implementation and operation during the power transfer phase. In particular, the power transmitter may be arranged to repeatedly interrupt the power transfer phase by measurement intervals during which the measurements may be performed as described. Due to the efficiency of the measurement operation, the duration of the measurement interval may be reduced to very short intervals and the interruption caused to the power transfer operation may be reduced and kept very small.

In the approach, the drive frequency may be set to the measurement frequency during the measurement intervals and the measurement frequency may specifically be a predetermined frequency, such as 30kHz in the specific example. This may ensure that the measurement is particularly made at frequencies which provide a good indication of the power transfer function/operation over a suitable frequency range. It may furthermore provide improved information as it may allow consistent and comparable measurements. For example, it may provide more consistent and comparable measurements to be input to a trained neural network and with these measurements being comparable to measurements for training data used to train the trained neural network.

In many embodiments, the frequency controller 309 may be arranged to compensate the measurements for the difference in the levels of the drive signal during the measurement. Indeed, whereas the drive signal may be generated to have a waveform with a significant energy at the harmonic frequencies, the harmonic components will tend to have different levels. However, for a predetermined, known waveform, the difference in the levels can be determined. In many embodiments, the measurements may be compensated for the difference in the levels of the drive signal at the different harmonic frequencies.

For example, in the example of a square wave signal with a 20% duty cycle, the first harmonic (fundamental frequency) is 28% larger than the second harmonic at twice the fundamental frequency. Accordingly, the measurement at the second harmonic frequency may be increased by 28% as part of the consideration and comparison to the fundamental frequency. Similarly, the third harmonic may be increased by 93% as part of the comparison.

In many embodiments, the described operation may be performed at regular/periodic intervals. For example, a measurement interval may be initialized every, say, 100msec or 1 sec. However, in many embodiments, the measurement and adaptation may be performed in response to a particular event occurring. For example, in some embodiments, the power transmitter may be arranged to perform the measurement operation and adaptation when a change in operating parameters occurs or is detected.

In particular, in many embodiments, the measurement circuit 307 may be arranged to initialize the measurement and typically the adaptation in response to receiving a power step change request from the power receiver. Thus, if the power receiver requests a step change in power, the power receiver may suspend/override the power control loop and apply the step change by setting the drive frequency (and possibly e.g. a duty cycle) to a suitable value for the modified power level. It may further initiate a measurement process for the transmitter coil current and e.g. use the result to determine the suitable drive frequency for the requested power level. Alternatively or additionally, it may e.g. determine a suitable operating range for the new power level.

As a specific example for e.g. a Ki system, the power transmitter may in response to receiving a Pcon power request message from the power receiver proceed to initialize a measurement process and adapt the drive frequency in dependence on the measured transmitter coil currents at the different frequencies. As the described measurement process may typically be performed very quickly, any delay incurred to the power level change may be acceptable, or even in many cases negligible.

In many embodiments, the frequency controller 309 is arranged to determine a power transfer function for the power transfer system. The power transfer function is a function that represents/ provides a power transfer level as a function of the drive frequency. The power transfer level may be the power level of the power transfer signal and may represent the amount of power that is transferred to the power receiver. The transmitter coil current is directly related to the power transfer signal power level and the power transfer function may in many embodiments be represented directly by the transmitter coil current as a function of the drive frequency.

In some embodiments, the frequency controller 309 may be arranged to determine the power transfer function to provide an accurate quantitative power level for the power that is being transferred to the power receiver and/or of the power extracted from the driver 301/the power of the drive signal and/or the power being provided to the output circuit/the transmitter coil 103. In such cases, the frequency controller 309 may consider other parameters, including typically other measured values, and perform an accurate calculation. For example, in some embodiments, additional voltage measurements may be performed and based on the current measurements and the voltage measurements an accurate quantitative power level may be determined. The power transfer function may thus be a quantitative power transfer function that may provide an accurate indication of the power level. In such cases, the power transfer function may be dependent on other parameters than the frequency, such as on a measured voltage level, a phase difference between voltage and current etc. E.g. the power transfer function may consider the relative phase between the transmitter coil current and a transmitter voltage in order to e.g. differentiate between real power and apparent/reactive power. For example, the power transfer function may be determined to reflect the real power value.

In other embodiments, the power transfer function may be determined as a function that may not provide an accurate quantitative power level value, but which e.g. merely has some properties/characteristics that provide an indication of how the power level of an accurate quantitative power transfer function varies with frequency. For example, the determined power transfer function may be one which has a(ny) monotonic relationship with such an accurate quantitative power level. The power transfer function may typically be determined as a function that has an overall shape, or at least a similar gradient characteristic as the accurate power level dependency on the frequency.

In particular, as will be shown in more detail later, the shape/properties of the transmitter coil current as a function of the frequency tends to be sufficiently representative of the accurate quantitative power level to allow the transmitter coil current in itself to be a suitable measure. Accordingly, the transmitter coil current as a function of frequency is in many embodiments itself a suitable power transfer function. Of course, this also reflects the close correspondence between the transmitter coil current and the power transfer level.

In many embodiments, the power transfer function may be determined to be indicative, but not (necessarily) quantitative of the power that is being transferred to the receiver/fed to the output circuit/transmitter coil.

The power transfer function may be a load function for the current power transmitter and power receiver arrangement where the load function reflects how the loading of the drive signal by the output circuit depends on the frequency of the drive signal for the current power transmitter and power receiver arrangement.

The load may be a load of the driver. The load may be a load of an output of the driver generating the drive signal/ providing the drive signal to the output circuit. The load may be the load of the output circuit experienced by an output of the driver providing the drive signal to the output circuit. A load of a signal may be a load of an output generating/ providing the signal. The load may be an impedance. The load may be an impedance of the output circuit. The load and/or loading of the drive signal by the output circuit may be a property/characteristic of a power provided to the output circuit. The power may be a complex power including both an active power component and a reactive power component. The load may be indicative of an active power, a reactive power, and/or an apparent power being provided/ transferred to the output circuit by the drive signal.

The power transmitter and power receiver arrangement may include parameters and characteristics of the power transmitter and the power receiver individually, such as component values etc. Such parameters and characteristics may be static. The power transmitter and power receiver arrangement may further include parameters and characteristics of the interaction between the power transmitter and power receiver for the current scenario/ situation/ arrangement. Such parameters and characteristics may include the relative position and e.g. coupling between the power transmitter and power receiver. Such parameters and characteristics may typically be dynamic and may be different for different power transfers between the same power transmitter and power receiver. The load provided by the output circuit to the drive signal and driver depends on the power receiver and on how this is coupled to the transmitter coil 103 (including relative position, coupling parameters etc.). Thus, although the load may be determined at the power transmitter and although it is an internal power transmitter parameter (the coupling between the driver and the output circuit), the load is dependent on and reflect the power transmitter and power receiver arrangement.

The power transfer function may thus reflect/be indicative of the changes in the loading that occurs when the frequency of the drive signal, and thus the power transfer signal, varies. In many embodiments, the power transfer function may be a load power function that is indicative of the power being extracted by the output circuit 103, 303 from the drive signal and thus from the driver 301. In many embodiments, the power transfer function may specifically be a power transfer function indicative of a level of power being transferred to the power receiver by the power transfer signal, and may specifically be a load power level function indicative of a level of power being provided to the load of the power receiver.

In a resonant system employing a resonant circuit at the output of the power transmitter to generate the power transfer signal, and/or a resonant circuit for extracting power from the power transfer signal by the power receiver, the power level being transferred depends on the frequency of the drive signal and the power transfer signal. Accordingly, the power level that is provided to the load 605 may depend on the drive signal frequency and consequently so may the power being extracted from power receiver input circuit, the power transfer signal, the power transmitter output circuit, the drive signal, and the driver respectively. Thus, each of these may vary as a function of the frequency and the load function may represent one, more, or indeed all of these power levels and loads.

The dependency on the drive signal frequency and the power transfer signal frequency is not limited to the power signal but will also extend to other parameters, such as the drive signal current (i.e. the load current extracted by the output circuit 103, 303). Similarly, the current or voltages at the power receiver may depend on the frequency and may accordingly reflect the loading of the drive signal. In some embodiments, the load function may represent such other parameters of the load of the drive signal. Specifically, the load function may be indicative of a variation of a current and/or voltage parameter for the drive signal as a function of the frequency for the specific power transmitter and power receiver arrangement. The power level of the drive signal as a function of the frequency may be an example of a load function that reflects a variation of a current and voltage parameter as a function of a frequency (bearing in mind that the power is determined by the voltage and current).

The frequency controller 309 may determine the power transfer function from the transmitter coil current measurements.

In order to improve the determination of the power transfer function it is typically advantageous to have more measurements of the transmitter coil current. In many embodiments, three different measurements may be made for three different harmonic frequencies, such as specifically for the first (fundamental) harmonic, the second harmonic, and the third harmonic.

In addition, in many embodiments where the operation is performed during a power transfer phase, the transmitter coil current may also be measured for the current operating frequency. This may tend to provide suitable information and in particular may provide particular information on a suitable operating point. The operating frequency may typically be significantly different, e.g. lower, than the predetermined measurement frequency and the additional measurement points (including potentially harmonics of the measurement frequency) may allow an improved determination of the power transfer function. Further, the measurements around the current operating point may often be particularly advantageous by providing accurate measurements around a likely operating range/point for future operations thereby providing improved accuracy of the power transfer function that are more likely to be relevant for future operation.

In many embodiments, the determination of the power transfer function may be based on measurements of the transmitter coil current for three to five different frequencies, and specifically for two to four higher harmonic frequencies. The inventors have realized that this is particularly advantageous by providing a particularly advantageous trade-off between complexity and impact to the power transfer operation on one hand, and the accuracy of the estimated power transfer function and the adaptation on the other hand.

Different approaches may be used to determine the power transfer function from the measurements.

As a low complexity example, in some embodiments, the frequency controller 309 may have stored a number of predetermined power transfer functions which e.g. may have been determined based on various measurements during a development or manufacturing stage. The frequency controller 309 may then compare the measured values to the corresponding values for the predetermined reference power transfer functions and determine the current power transfer function as the reference power transfer functions providing the closets match.

As another example, the frequency controller 309 may determine the power transfer function by curve fitting of functions to the measurements. For example, the frequency controller 309 may have stored one or more functions that describe estimated power transfer functions. The functions may have a number of variable parameters and the frequency controller 309 may adapt these to result in a closest fit with the measurement values.

As yet another example, the frequency controller 309 may be arranged to generate the power transfer function by interpolating between the measurement values. Such interpolation may in some embodiments be a simple linear interpolation or more complex interpolations may be used in other embodiments.

As yet another example, in some embodiments, the frequency controller 309 may include a trained neural network which is arranged to receive the measurement transmitter coil current values as input values and to generate an output corresponding to a power transfer function. The trained neural network may receive other data as input data, such as configuration parameters, the current or desired power level, power transmitter properties, power receiver properties, further measurements (e.g. of the transmitter coil current at other frequencies) etc. The trained neural network may be trained using training data that is generated from measurements and tests made during a design and development phase. For example, many measurements may be made for different power levels to generate a large batch of transmitter coil current measurements for power transfer operations. Further, for each set of transmitter coil currents, a full power transfer function may be measured, e.g. by a full frequency sweep. A loss function may then be determined as the difference between the power transfer function generated by the trained neural network and the measured power transfer function. The neural network may then be trained based on such test data and loss function.

The frequency controller 309 may determine the load function for the current power receiver and power transmitter arrangement and specifically for the current power transfer operation. The frequency controller 309 may then proceed to determine a parameter for the drive frequency from the power transfer function, such as specifically a suitable current drive frequency or a suitable power operating range for the drive frequency.

In many embodiments, the load function may be indicative of a phase difference between the voltage and current of the drive signal, or possibly of an induced signal at the power receiver, as a function of the frequency. The phase difference of the drive signal may for example indicate whether the loading by the output circuit 103, 303 has an inductive reactance or a capacitive reactance.

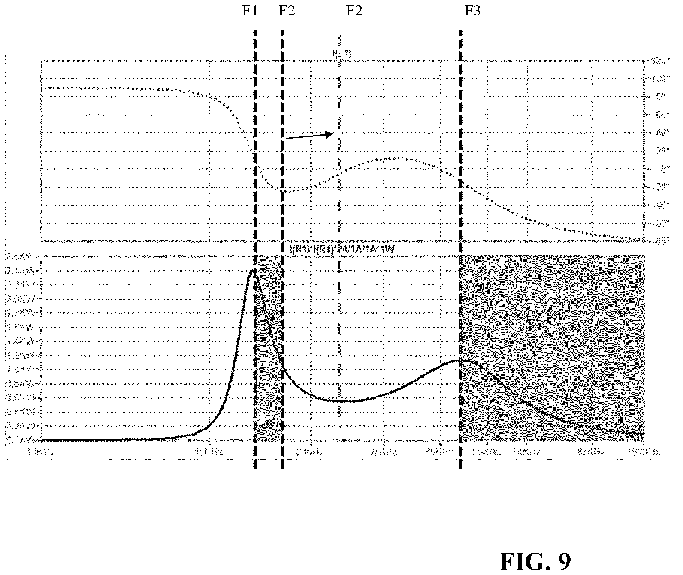

An example of a power transfer function and corresponding phase of the transmitter coil current (I(L1)) is illustrated in FIG. 9. As can be seen, there is a strong correlation between the power transfer function and the transmitter coil current phase.

A particular issue in many embodiments is that the (complex impedance) load of the inverter should be inductive, i.e. that the voltage of the drive signal should lead the current. Indeed, a capacitive load with a leading current can be destructive for the output stage of the inverter due to the fact that switching in such cases causing so called hard switching, due to the reverse recovery of anti-parallel diodes and the sudden discharge of the slew rate limiting capacitors across the switches. In contrast, operating the driver with an inductive load with a lagging current is not destructive for the driver output stage and in addition results in substantially reduced EMI. Improved switching performance can be achieved as zero voltage switching (ZVS) operation can be applied for such a load.

Accordingly, in many embodiments, the frequency controller 309 may be arranged to constrain the power control operating such that it can only operate at frequencies for which the load of the driver 301 is inductive and thus where the phase of the drive signal/transmitter coil current (compared to the voltage) is negative. As the phase is linked to the power transfer function, the frequency controller 309 may proceed to evaluate the power transfer function to determine an operating frequency range and specifically to determine an operating frequency range in which the load of the driver 301 is inductive (and the phase of the transmitter coil current is negative).

The power transfer function for a practical resonant wireless power transfer system typically includes two peaks or in some cases only one peak. Such peaks may arise from the characteristics of the resonance circuits involved in the power transfer. Further, the phase of the drive signal current is closely related to the peaks of the power transfer function. In particular, as illustrated in FIG. 9, the negative phase, corresponding to an inductive load, occurs for frequencies higher than that of a peak.

In many embodiments, the frequency controller 309 may be arranged to estimate a peak of the power transfer function. It will be appreciated that many approaches for determining a peak of a function are known and that any suitable approach may be used. The frequency controller 309 may subsequently determine an operating frequency range based on the peak with this determination including an exclusion of frequencies lower than the frequency of the peak. The operating range may for example be determined with a lower bound on the lower frequency of the operating frequency range being set to the frequency of the estimated peak. Thus, the operating range is determined to not include frequencies lower than the frequency of the peak.

In some cases, the lower frequency of the range may be set to the peak frequency or in some cases the lower frequency may be determined to be a frequency that is higher than the peak frequency (e.g. to include a suitable margin). The upper frequency of the operating frequency may be determined in a suitable way, such as e.g. to ensure that the operating frequency range has a given e.g. predetermined size. In other embodiments, the upper frequency may for example be set to a value determined based on the power transfer function.

As illustrated by FIG. 9, the phase of the transmitter coil current is also correlated with the gradient of the power transfer function and/or the transmitter coil current as a function of frequency. In particular, the negative phase/inductive load occurs for frequencies for which the power level and transmitter coil current reduces for increasing frequency (corresponding to being intervals to the "right" of the peaks in FIG. 9, i.e. for frequencies higher than the peak frequency). In some embodiments, the frequency controller 309 may accordingly be arranged to determine a suitable operating frequency range as a range for which the transmitter coil current decreases for an increasing frequency.

For example, the power transfer function may be determined and analyzed to determine the frequency intervals for which the power level reduces for increasing frequencies. The operating range may then be determined with the constraint that it may not include any frequencies outside these intervals.

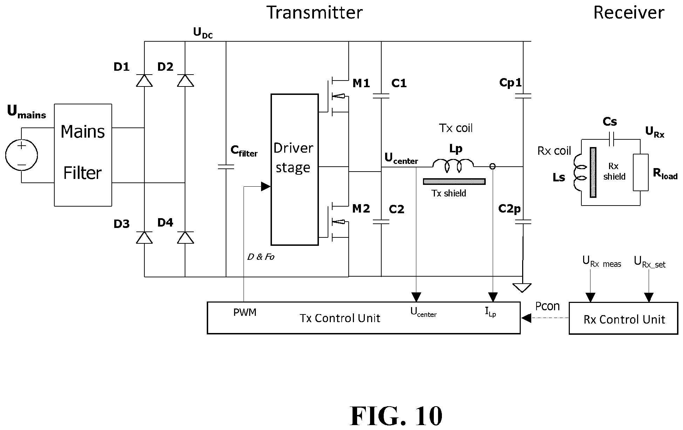

In the following, more specific examples of the approach will be provided with respect to an application to a Ki wireless power transfer system. An equivalent circuit for the exemplary system is illustrated in FIG. 10.

The exemplary Ki wireless power system includes a cascade of a mains filter, a mains rectifier, a power stage (corresponding to the driver 301), a transmitter resonant tank (Lp & Cp1+Cp2), and a receiver resonant tank (Ls & Cs) including the load (Rload). The resonant tank includes the transmitter coil 103/Lp.

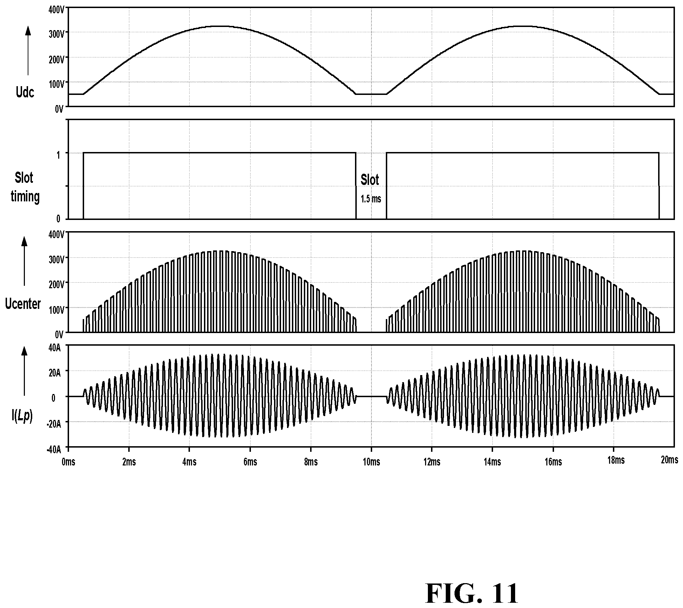

The power stage is based on the half bridge inverter and drives the power transmitter resonant tank. It consists of two switches, the high-side switch M1 and the low side switch M2. When the high-side switch M1 is closed, the potential of switch node Ucenter is close to the Udc voltage. On the other hand, when the low side switch M2 is closed, the potential of switch node Ucenter is close to the power ground. The switches M1 and M2 are driven in anti-phase by the Driver stage, which results in a square wave voltage at switch node Ucenter, with controllable frequency *Fop* and duty cycle *D.* FIG 11 shows examples of signals in the system.

The nominal resonance frequency F_{PTx} of the resonant tank is determined by Lp and Cp. The following considerations will specifically consider a cook top application with a resonance frequency of 26.8 kHz and a concealed power transmitter application with a resonance frequency of 30.0 kHz.

The nominal resonance frequency F_{PRx} of the receiver resonant tank is determined by Ls and Cs and in the specific considered examples, it is 30.0 kHz for both the cooktop and the concealed case.

In parallel to each switch, a small capacitor (C1 and C2) is included, to reduce the slew rate of switch node Ucenter during the transition time (M1 and M2 off state) to improve the EMC behavior.

The Tx Control unit, which corresponds to the power transmitter controller 305,the measurement circuit 307, and the frequency controller 309, provides the required Pulse Width Modulated (PWM) signal and frequency for the driver stage. Both the operating frequency *Fop* and duty cycle *D* of the resulting square wave at the switch node can be controlled. The operating frequency *Fop* may range from 20 kHz to 74 kHz. The duty cycle *D* can be adjusted in the range of 20% to 50%, independent of the operating frequency *Fop.*

The Rx Control unit in the power receiver may measure the output parameter and compare this with the setpoint. In the specific example the received voltage U_{Rx} is the controlled output parameter. The Rx control unit adjusts the Tx control unit accordingly by increasing or decreasing the power control value Pcon. During each mains cycle (20 mSec) a new Pcon value is sent to the Tx control unit during a so-called communication slot (1.5 msec), using NFC technology (not illustrated). Thus, the Rx control unit implements/completes the power control loop.

The operation of the system is heavily dependent on the coupling between the transmitter coil and the receiver coil. The coupling may typically be represented by the k-factor. Due to the relatively large range of the z-distance (the distance perpendicular to the plane of the coils) of Ki wireless power system applications, the k-factor range between the transmitter coil and the receiver coil varies substantially. On top of that, the k-factor is also determined by the size of the coils and the misalignment between the coils, etc. The larger the z-distance, the more sensitive the k-factor becomes to misalignment. Therefore, the k-factor of a Ki wireless power system may often vary from e.g. 0.4 to 0.8.

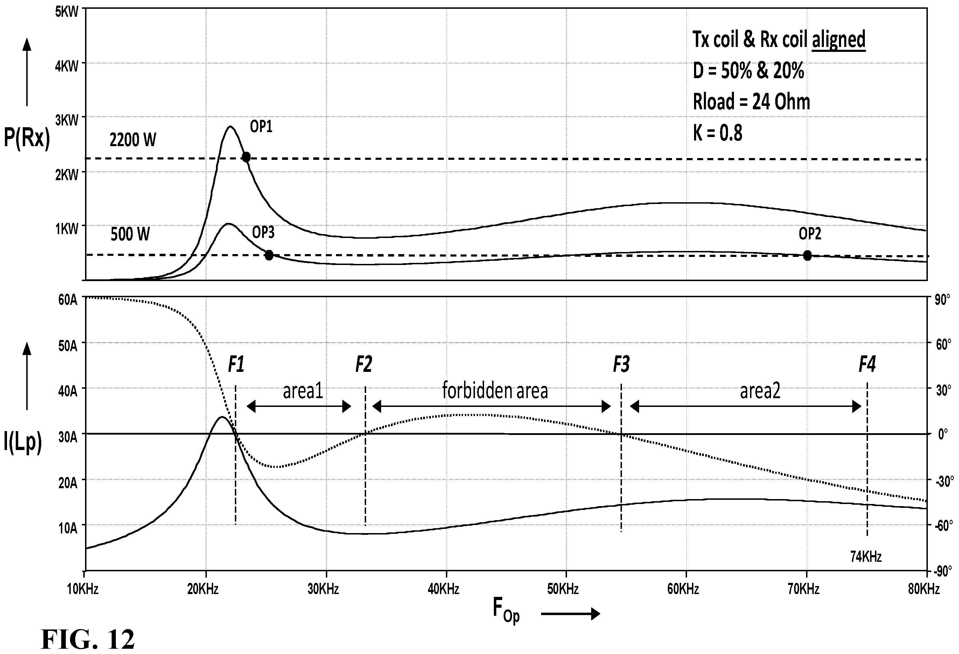

An example of a power transfer function and the transmitter coil current (I(Lp)) for a coupling factor k=0.8 and a with a 2.2 kW power receiver is illustrated in FIG. 12. The load Rload is fixed at 24 Ω and receives a power of 2200 W. The drive signal is generated with a duty cycle *D* of 50%. The transmitter coil 103 and the receiver coil 107 are aligned in the plane of the coils.

In the example, the z-distance between the coils is 15mm and the K-factor = 0.8. The plot shows that the phase of the inverter current *I*(*Lp*) starts positive at +90° and passes 0° where *F1* equals 22.4 kHz. However, in between *F2* = 33.0 kHz and *F3 =* 53.8.0 kHz the phase is positive again. From *F3* onwards till *F4* = 74 kHz the phase of the inverter current stays negative. The frequency controller 309 may from this determine the safe operating areas to be from *F1* to *F2* and from *F3* to *F4* = 74 kHz.

For a load of 2200 W the inverter in the example runs at an operating drive frequency of 23.3 kHz and a duty cycle of 50% (OP1). If the power transmitter receives a message from the power receiver to reduce the power from 2200 W to for instance 500 W, both the frequency *Fop* and the Duty cycle *D* need to be adjusted. As indicated by the power transfer function of FIG. 12, the new optimum operating point OP2 is somewhere close to 70 kHz (higher frequency side of the high frequency peak), in combination with a duty cycle *D* of 20%. Although OP3 seems to also be a valid operating point, the losses in the shielding are higher.

To safely move to the new operating point OP2, the power transmitter may consider the phase between the inverter voltage Ucenter and the inverter current *I(Lp).* Directly after receiving a new Pcon message to reduce the power, the power transmitter may:
- Keep the inverter in operating area 1
- Stepwise increases the drive frequency *Fop* with a certain rate d*Fop*/step
- Step change the drive frequency from area 1 to area 2 when approaching the upper limit of area 1, e.g. by directly changing the frequency to for instance 60 kHz

However, the power at 60 kHz is higher than the power prior to the step change. To reach the new operating point, the drive frequency *Fop* must be further increased, and the duty cycle must be further reduced. So right after the step change to 60 kHz is made, the power transmitter may:
- Reduce the duty cycle *D* to a lower value, for instance 25%
- Stepwise increase the drive frequency *Fop* with a certain rate d*Fop*/step
- Change both *Fop* and *D* to 70 kHz and 20% respectively by means of a suitable algorithm

The response time of this Ki-system with k = 0.8, when going from a high power to a low power operating point, may be relatively high. It would be advantageous to reduce the response time. In order to improve the dynamic response of the Ki-system, it would be advantageous if the power transmitter is able to adapt to whether the power transfer function is one with multiple peaks and resulting in the need for a step change or whether it is one that has a single peak and provides a single continuous operating frequency range (considering constant load (or an adaptation/updating for changing loads). In particular, the knowledge that can be provided by using the determined power transfer function allows the power transmitter to directly switch between the available frequency ranges without requiring live real time measurements of e.g. the phase of the transmitter coil current. Indeed, in many embodiments, the knowledge that can be provided by the power transfer function may allow the power transmitter to directly make a step change to the new estimated optimum operating point, including both adapting the frequency to the optimum value and setting the duty cycle to provide the appropriate power.

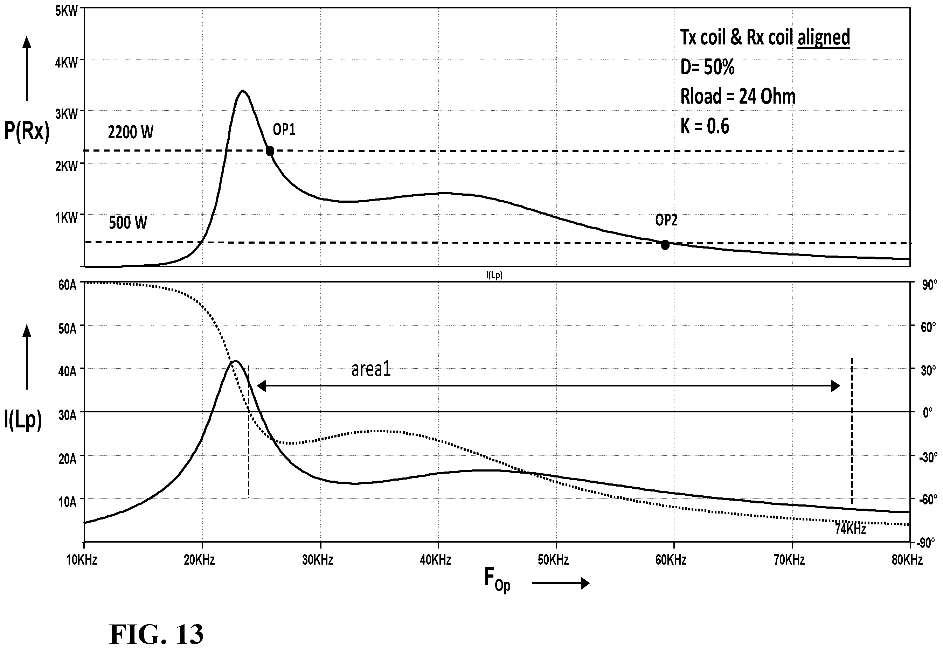

FIG. 13 shows a corresponding example of a power transfer function and transmitter coil current for a scenario in which the z-distance between the coils is 22 mm and consequently the k factor = 0.6. The plot shows that the phase of the inverter current starts positive at + 90° and passes 0° for F1 =24.0 kHz. From F1 onwards the phase of the inverter current stays negative even if the operating frequency *Fop* is increased to *F4* = 74 kHz maximum. In this example, a single safe operating range from F1 =24.0 kHz to *F4* may thus be determined excluding the positive slope in the power control from ~32kHz to ~40kHz (assuming constant load).

In this case, for a load of 2200 W, the inverter runs at 25.7 kHz with a duty cycle of 50% (OP1). If the power transmitter receives a Pcon message to reduce the power from 2200 W to for instance 500 W, only the operating frequency *Fop* needs to be adjusted in this case. FIG. 13 shows that the new optimal operating point OP2 is somewhere close to 58.6 kHz. Directly after receiving the message request to change power, the power transmitter can directly proceed to increase the frequency to the new value of 58,6 kHz with a suitable rate of change. As the power transfer function is known, the power transmitter can proceed to do so while knowingly staying within a safe operating range and no step change of the frequency is required.

The approach may thus as illustrated be used to adapt the operation of the power transfer. Indeed, the boundary frequencies *F1, F2* and *F3* for the safe operating areas are not fixed, but depend on the k-factor and the connected load. The approach may be used to dynamically determine these frequencies and to determine a safe operating area in which the load of the driver 301/inverter is inductive (e.g. so that Zero Voltage Switching (ZVS) operation is feasible) and/or may directly be used to adapt the drive frequency to e.g. be close to a new optimal operating point.

In particular, from typical measured power transfer functions, it can be seen that this is the case for a frequency interval that includes frequencies from a given peak frequency and thus the system may determine a suitable safe operating frequency range following such a peak. Further, as can be seen from the figures, in cases where the power transfer function has two clear peaks, there is further a frequency range between the two peaks which is not safe and should not be used. This frequency range can be determined based on the measurements and the power transmitter can be controlled to ensure that the drive frequency is not within this range.

As a specific example of determining a power transfer function for the system of FIG. 10, the measurement circuit 307 may be arranged to make measurements at four frequencies, namely a current operating frequency and three harmonic frequencies of a predetermined frequency which specifically may be the resonance frequency of the power receiver. The measurements may be made while the drive signal is generating the measurement drive signal, i.e. it is fed with a drive signal with substantial harmonic content. The frequency controller 309 may then determine the power transfer function based on these frequencies.

The measurement circuit 307 may accordingly use the actual operating frequency of the inverter *Fop_0* as the first measurement frequency (including in many embodiments also measuring the higher harmonics of the operating frequency). The second frequency *Fop_1* is chosen deliberately to be 30 kHz because it equals the power receiver resonance frequency. As a consequence, the inverter current *I(Lp)* will always be lagging the inverter voltage Ucenter and thus this will be a safe operating point for the measurements. The third and the fourth frequency are *Fop_2* and *Fop*_*3* respectively and correspond to the two first higher harmonics of *Fop*_*1*, which are 60 kHz and 90 kHz respectively.

The inverter current *I(Lp)* is measured at these four distinct frequencies.

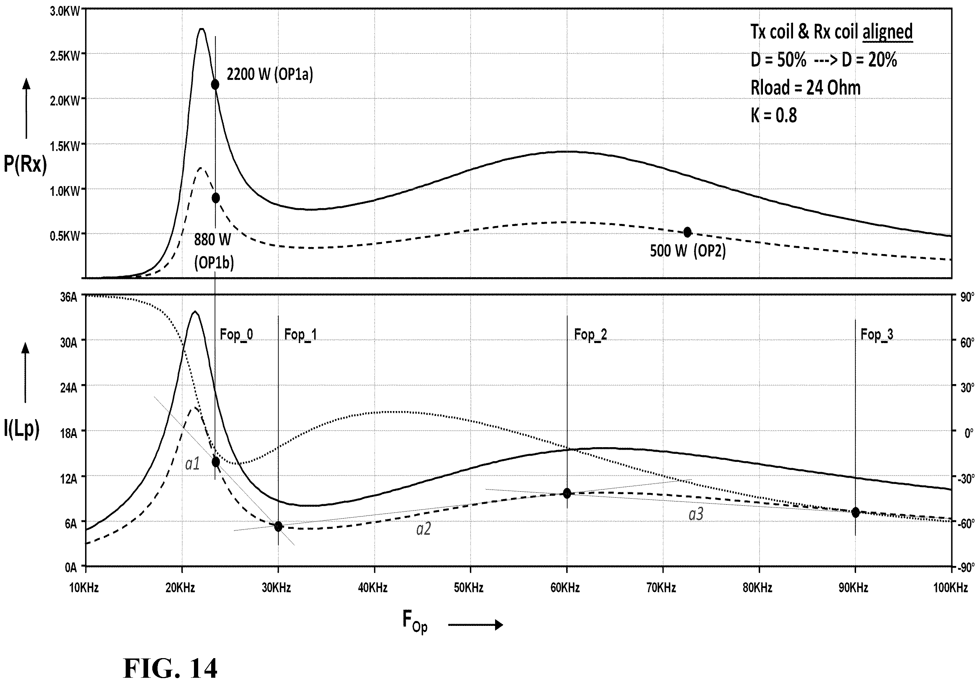

FIG. 14 illustrates an example corresponding to the scenario of FIG. 12. The transmitter coil current is measured at the four frequencies *Fop_0, Fop_1, Fop_2,* and *Fop_3* are measured and an estimate of the power transfer function represented by the transmitter coil current function/profile is generated by linearly interpolating between the measurements. The process includes compensating the measurements for the relative difference in the levels of the harmonics of the measurement drive signal. As illustrated, even such a low complexity approach yields an estimate which is relatively close to the correct underlying power transfer function.

Specifically, when a linear interpolation is applied between the measurement *frequenciesFop_0* & *Fop 1, Fop_1 & Fop_2* and *Fop_2 & Fop_3,* with respectively amplitudes *Aop_0 & Aop_1, Aop_1 & Aop_2* and *Aop_2 & Aop_3* three gradients *a1* to a*3* can be calculated: $a 1 = \frac{Aop _ 0 - Aop _ 1}{Fop _ 0 - Fop _ 1} = \frac{14 - 5}{23.3 - 30.0} = - 1.34 \frac{A}{kHz}$ *(negative)* $a 2 = \frac{Aop 1 - Aop _ 2}{Fop 1 - Fop _ 2} = \frac{5 - 9}{30.0 - 60.0} = + 0.13 \frac{A}{kHz}$ (*positive*) $a 3 = \frac{Aop 2 - Aop _ 3}{Fop 2 - Fop _ 3} = \frac{9 - 7}{60.0 - 90.0} = - 0.07 \frac{A}{kHz}$ *(negative)*

The gradients *a1* and *a3* are negative and the gradient *a2* is positive. Operation at frequencies with a negative gradient is to be avoided. Considering the interpolated curve, a peak is clearly present. Although, the exact position of the peak in the power transfer function cannot be determined, the measurements allow it to be estimated (e.g. to be somewhere around 60 kHz). As an example, if the power transmitter receives a request to reduce the power to a value of 500 W (in this example), the power transmitter may on the basis of the measurements proceed to:
- Apply a step change in the drive frequency from the current drive frequency 23.3 kHz to for instance 65 kHz
- Increase the loop gain *dP*(*Rx*)/*d*(*Fop*)

Both of these actions reduce the response time and settling time and may improve the dynamic response of the Ki wireless power transfer.

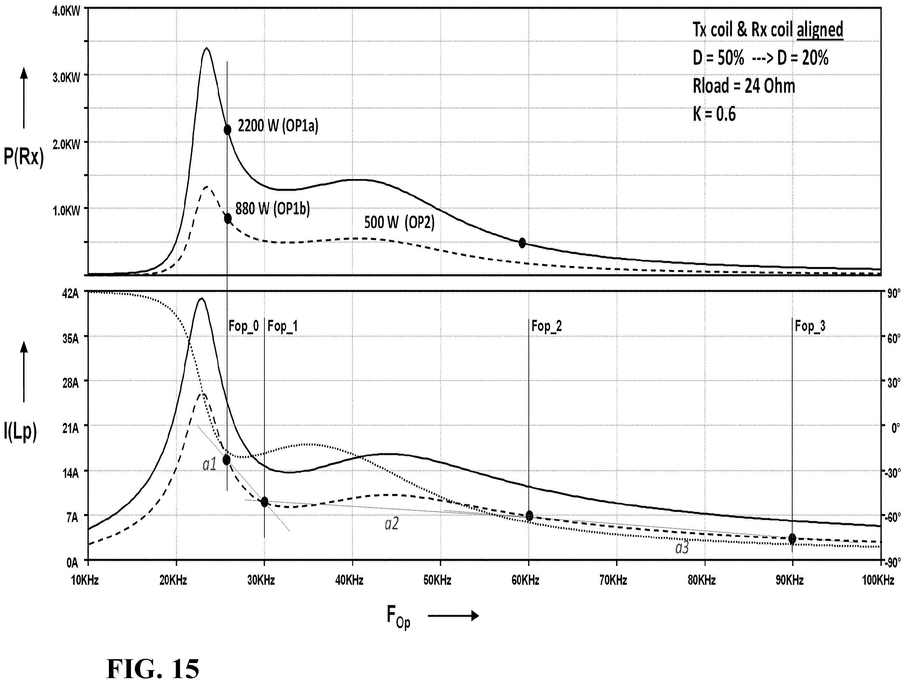

FIG. 15 illustrates an example corresponding to the scenario of FIG. 12. The transmitter coil current at the four frequencies *Fop_0 , Fop_1, Fop_2,* and *Fop_3* are again measured and an estimate of the power transfer function represented by the transmitter coil current function/profile is generated by linearly interpolating between the measurements. The process includes compensating the measurements for the relative difference in the levels of the harmonics of the measurement drive signal. As illustrated, even such a low complexity approach again yields an estimate which is relatively close to the correct underlying power transfer function.

Specifically, when a linear interpolation is applied between the measurement frequencies *Fop_0 & Fop_1, Fop_1 & Fop_2* and *Fop_2 & Fop_3,* with respectively amplitudes *Aop_0 & Aop_1, Aop_1 & Aop_2* and *Aop_2 & Aop_3* three gradients *a1* to a*3* can be calculated: $a 1 = \frac{Aop _ 0 - Aop _ 1}{Fop _ 0 - Fop _ 1} = \frac{16 - 9}{27.7 - 30.0} = - 2.12 \frac{A}{kHz}$ *(negative)* $a 2 = \frac{Aop 1 - Aop _ 2}{Fop 1 - Fop _ 2} = \frac{9 - 7}{30.0 - 60.0} = - 0.07 \frac{A}{kHz}$ *(negative)* $a 3 = \frac{Aop 2 - Aop _ 3}{Fop 2 - Fop _ 3} = \frac{7 - 4}{60.0 - 90.0} = - 0.10 \frac{A}{kHz}$ *(negative)*

As the gradients are all negative, corresponding to an inductive load being provided to the inverter, there are no excluded/unsafe frequency ranges. Since the gradient *a3* has a larger magnitude than gradient *a2,* a smaller high frequency peak exists. The estimated location of this peak is therefore somewhere around 50 kHz. As an example, if the power transmitter receives a request to reduce the power from 2200W to a value of 500 W (in this example), the power transmitter may on the basis of the measurements proceed to:
- Apply a step change in the drive frequency from the current drive frequency 25.7 kHz to for instance 55 kHz
- Increase the loop gain *dP*(*Rx*)/*d*(*Fop*)

Both of these actions reduce the response time and settling time and may improve the dynamic response of the Ki wireless power transfer.

Thus, as can be seen, knowledge of the power transfer function may be used to improve the power control performance of the power transfer system.

In many embodiments, the frequency controller 309 may in addition to controlling the drive frequency also be arranged to adapt the loop gain of the power control loop that controls the power level of the inductive power transfer signal in dependence on the measurements.

In particular, as described above, the gradient of the power transfer function and the transmitter coil current as a function of the frequency varies with the frequency. However, the (uncompensated) loop gain for the frequency power control is directly dependent on this gradient and the loop gain varies with frequency. However, the gradient is estimated by the power transfer function and accordingly the frequency controller 309 may estimate the loop gain from the determined power transfer function and proceed to adapt the loop gain accordingly. For example, the frequency controller 309 may be arranged to set/vary a manual gain factor that is set for the loop such that the overall loop gain is constant. Accordingly, the manual gain may dynamically be modified dependent on the drive frequency such that a constant overall gain is achieved.

For example, when a step change occurs in the drive frequency, e.g. when a changed power level is requested, the frequency controller 309 may in addition to determine a suitable drive frequency proceed to evaluate the power transfer function at the new frequency to adapt the manual loop gain in order to achieve an overall desired loop gain for the specific frequency and operation.

In many embodiments, the compensation may be to achieve a constant loop gain for different frequencies but it will be appreciated that in some cases/embodiments it may be desired to vary the loop gain, e.g. to increase the loop gain for a time period following a large power level change.

In many embodiments the frequency controller 309 may consider other parameters than just the measured transmitter coil current which controls the drive frequency. In particular, in some embodiments, the power transmitter may be arranged to receive power receiver property data from the power receiver where the power receiver property data is indicative of a property of the power receiver. The control of the drive frequency may thus be based on the transmitter coil current measurements but with the adaptation being adapted to the specific properties of the power receiver. In many embodiments, this may be achieved by the determination of the power transfer function being dependent on the power receiver property data.

In particular. The power transfer function can be estimated by using data that is provided by the power receiver through an NDEF message. Such data may for example include:
1. The outer and inner diameter d of the receiver coil
2. The receiver coil standoff height
3. Shielding material and standoff height
4. The open-air inductance Ls of the receiver coil
5. The inductance Ls of the receiver coil, the inductance Lp of the transmitter coil, and k-factor for the specific arrangement.
6. The capacitance of a receiver resonant capacitor Cs
7. The nature of the load (motor, resistive or both)
8. The minimum and maximum power of the load

From such NDEF data, an estimate can be made for a reference k-factor for a reference power transmitter and power receiver setup. If the actual condition differs from the reference setup, for instance due to misalignment, a different z-distance or load, the derived reference k-factor can differ from the actual k-factor, but the result can still provide useful information for the power transmitter. For example, it may assist in
- Determining the power transfer function
- Selecting an initial operating frequency *Fop*
- Adjusting the overall loop gain parameters depending on the operating point

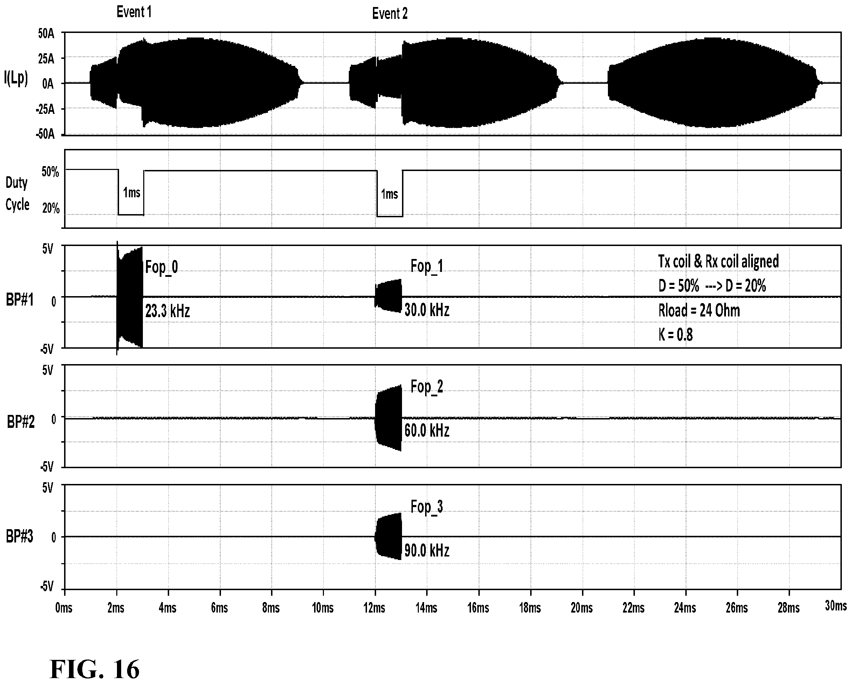

An advantage of the described approach is that it may allow very fast measurements of the transmitter coil current at different frequencies. FIG. 16 illustrates an example of signals of the power transfer system when performing a measurement at four frequencies for the example of FIG. 14 (*P*(*Rx*) = 2200 W, *Fo* = 23.3 kHz, *D* = 50%, *k =* 0.8)

In the specific example, at 2 msec into the first half mains cycle, measurement Event 1 starts. This event moves the system to operate at *Fop_0* = 23.3 kHz and *D =* 20%. During Event 1, a band pass filter #1 measures the weighted amplitude of the first harmonic of the current *I(Lp)* at the center frequency of 23.3 kHz

Subsequently, at 2 msec into the second half mains cycle, measurement Event 2 starts. This event moves the system to operate *at Fop_1* = 30.0 kHz and *D =* 20%. During Event 2, three band pass filters #1, #2 and #3 measure the weighted amplitude of the first, second and third harmonic of the current *I(Lp)* at center frequencies 30.0 kHz, 60.0 kHz and 90 kHz. As another example, a Fourier transform may be applied to evaluate the signal at these frequencies.

The measurement circuit 307 and frequency controller 309 may be arranged to perform measurements and adapt the drive frequency at suitable times, such as e.g.
- Only once, for instance directly after the system has started and became stable.
- In response to a power request message being received by the power transfer coil.
- In response to a change in the operating point (OP) being detected, for instance due a sudden change of the position of the power receiver and thus alignment of the coils.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
an output circuit (303, 103) comprising a transmitter coil (103) arranged to generate the inductive power transfer signal in response to a drive signal being applied to the output circuit (303, 103), the drive signal being a varying signal having a drive frequency;
a driver (301) arranged to generate the drive signal;
a power controller (305) arranged to adapt a power level of the inductive power transfer signal by varying the drive frequency;
a measurement circuit (307) arranged to:
control the driver (301) to set the drive frequency to a first measurement frequency and to generate the drive signal to have a waveform comprising at least one higher harmonic at a harmonic frequency being a multiple of the first measurement frequency;
determine a first measured transmitter coil current by performing a first measurement of a transmitter coil current for the transmitter coil at the first measurement frequency and determining a second measured transmitter coil current by performing a second measurement of the transmitter coil current at the harmonic frequency;
a frequency controller (309) arranged to control the power controller (305) to further adapt the drive frequency in dependence on the first measured transmitter coil current and the second measured transmitter coil current.

2. The wireless power transmitter of claim 1 wherein the frequency controller (309) is arranged to determine a drive frequency operation range for the drive signal in dependence on the first measured transmitter coil current and the second measured transmitter coil current, and to control the power controller (305) to constrain the drive frequency to not exceed the drive frequency operation range.

3. The wireless power transmitter of any previous claim wherein the first measurement frequency is a predetermined frequency.

4. The wireless power transmitter of any previous claim wherein the measurement circuit (307) is arranged to determine the first measured transmitter coil current and the second measured transmitter coil current during a power transfer phase.

5. The wireless power transmitter of claim 4 wherein the measurement circuit (307) is arranged to determine a third measured transmitter coil current by performing a measurement of the transmitter coil current at a current operating frequency of the drive signal, and the frequency controller (307) is arranged to control the drive frequency in dependence on the third measured transmitter coil current.

6. The wireless power transmitter of any previous claim wherein the frequency controller (309) is arranged to determine a power transfer function reflecting a power transfer level as a function of the drive frequency in dependence on the first measured transmitter coil current and the second measured transmitter coil current, and to control the drive frequency in dependence on the power transfer function.

7. The wireless power transmitter of claim 6 wherein the frequency controller (309) is arranged to estimate a peak of the power transfer function, and to determine an operating frequency range to not include frequencies lower than a frequency of the peak.

8. The wireless power transmitter of any previous wherein the frequency controller is arranged to determine a frequency range for the drive frequency for which the transmitter coil current decreases for an increasing frequency, and to control the drive frequency in dependence on the frequency range.

9. The wireless power transmitter of any previous claim wherein the frequency controller (309) is arranged to determine a frequency range for the drive frequency for which a phase of a current of the drive signal is negative relative to a voltage of the drive signal, and to control the drive frequency in dependence on the frequency range.

10. The wireless power transmitter of any previous claim wherein the frequency controller (309) is arranged to adapt a loop gain for a power control loop controlling the power level of the inductive power transfer signal in dependence on the first measured transmitter coil current and the second measured transmitter coil current.

11. The wireless power transmitter of any previous claim comprising a receiver arranged to receive power receiver property data from the power receiver, the power receiver property data being indicative of a property of the power receiver; and the frequency controller (309) is arranged to control the drive frequency in dependence on the receive power receiver property data.

12. The wireless power transmitter of any previous claim comprising a receiver arranged to receive a power step change request from the power receiver; and the measurement circuit is arranged to initialize the first measurement and the second measurement in response to receiving the power step change request.

13. The wireless power transmitter of any previous claim wherein the frequency controller (309) is arranged to compensate second measured transmitter coil current for a level difference between a harmonic of the waveform at the harmonic frequency and a harmonic of the waveform at the first measurement frequency.

14. The wireless power transmitter of any previous claim wherein the waveform is a square waveform having a duty cycle not in excess of 25%.

15. A method of operation for a power transmitter (101) wirelessly providing power to a power receiver (105) via an inductive power transfer signal, the power transmitter (101) comprising:
an output circuit (303, 103) comprising a transmitter coil (103) arranged to generate the inductive power transfer signal in response to a drive signal being applied to the output circuit (303, 103), the drive signal being a varying signal having a drive frequency;
a driver (301) arranged to generate the drive signal;
and the method comprising:
adapting a power level of the inductive power transfer signal by varying the drive frequency;
controlling the driver (301) to set the drive frequency to a first measurement frequency and to generate the drive signal to have a waveform comprising at least one higher harmonic at a harmonic frequency being a multiple of the first measurement frequency;
determining a first measured transmitter coil current by performing a first measurement of a transmitter coil current for the transmitter coil at the first measurement frequency and determining a second measured transmitter coil current by performing a second measurement of the transmitter coil current at the harmonic frequency; and
adapting the drive frequency in dependence on the first measured transmitter coil current and the second measured transmitter coil current.

16. A wireless power transfer system comprising the power transmitter of any previous claim 1 to **14** and further comprising the power receiver.
